# EUROPEAN PATENT APPLICATION

(11) **EP 4 578 573 A1**
(43) Date of publication of application: **02.07.2025**
(21) Application number: 23859741.3
(22) Date of filing: 23.05.2023
(51) Int. Cl.: B22F 1/102, B22F 1/00, C22C 33/02, C23C 26/00

(54) **METHOD FOR PRODUCING IRON-BASED SOFT MAGNETIC COMPOSITE POWDER AND IRON-BASED SOFT MAGNETIC COMPOSITE POWDER**

(30) Priority: 01.09.2022 JP 2022139578
(71) Applicant: JFE Steel Corporation, Tokyo 100-0011 (JP)
(72) Inventor: NAKAMURA, Takechika, Tokyo 100-0011 (JP); TAKASHITA, Takuya, Tokyo 100-0011 (JP); MASUOKA, Hiroyuki, Tokyo 100-0011 (JP); MATSUZAKI, Akira, Tokyo 100-0011 (JP)
(74) Representative: Haseltine Lake Kempner LLP
(86) International application number: PCT/JP2023/019208
(87) International publication number: WO 2024/047971

(57) **Abstract**

It is provided a method for producing an iron-based soft magnetic composite powder and the iron-based soft magnetic composite powder. The method for producing an iron-based soft magnetic composite powder includes a first mixing step of adding an aluminum dihydrogen tripolyphosphate dihydrate powder to an iron-based soft magnetic powder and stirring and mixing the aluminum dihydrogen tripolyphosphate dihydrate powder and the iron-based soft magnetic powder to obtain a first composite powder in which coating layers of aluminum dihydrogen tripolyphosphate dihydrate are formed on the surfaces of iron-based soft magnetic particles, wherein, for the spectrum when the aluminum dihydrogen tripolyphosphate dihydrate powder is analyzed by the X-ray diffraction method, the peak intensity of the (112) plane of aluminum dihydrogen tripolyphosphate dihydrate is 1.5 times higher than the peak intensity of the (102) plane of aluminum orthophosphate.

## Description

### TECHNICAL FIELD

The present disclosure relates to a method for producing an iron-based soft magnetic composite powder and the iron-based soft magnetic composite powder.

### BACKGROUND

Magnetic cores applied to power conversion devices such as motors and transformers have been made of stacked electrical steel sheets. However, in recent years, there has been an increase in the use of dust cores. The dust core is produced by filling a press mold with an iron-based soft magnetic powder and subjecting the iron-based soft magnetic powder to compression molding. This allows for realization of a complex shaped motor with a high degree of freedom in part shape. Moreover, the dust core can be formed by compression molding and thus can obtain a formed body close to the final part shape, which improves yield. In addition, it is impossible to suppress eddy current in the horizontal plane of the steel sheet in a stacked electrical steel sheet, resulting in anisotropic magnetic properties. On the other hand, in the dust core, each of the iron-based soft magnetic particles is insulated, so eddy current can be suppressed compared to the stacked electrical steel sheet, enabling higher efficiency in power conversion devices. A powder of iron-based soft magnetic composite particles with surfaces (iron-based soft magnetic composite powder) on which insulating coating is formed is required for producing the dust core. In such iron-based soft magnetic composite powder, the insulating coating may break down during compression molding. For this reason, efforts are made to strengthen the insulating coating or insulation layers.

JP2015-230930A (PTL 1) describes a soft magnetic powder obtained by mixing a soft magnetic powder with a condensed phosphate metal compound of 0.2 wt% to 0.8 wt% with respect to the soft magnetic powder, further mixing the soft magnetic powder with an insulating fine powder, and then forming coating containing the condensed phosphate metal compound around the soft magnetic powder. In this soft magnetic powder, it is said that the addition of the condensed phosphate metal compound can harden an insulation layer around the soft magnetic powder and increase the adhesion strength between the soft magnetic powder and the insulation layer. An example of the condensed phosphate metal compound is aluminum tripolyphosphate as condensed aluminum phosphate. Basic substances may be added to the condensed phosphate metal compound as a hardening accelerator. Al₂O₃ and SiO₂ are examples of the basic substance.

WO2011/077694A1 (PTL 2) describes a reactor using a soft magnetic powder. This reactor is made of a formed body formed by mixing a mixture of a soft magnetic powder and an inorganic insulating powder with a binding insulating resin to be granulated, further mixing the granulated material with a lubricating resin, and then pressing this mixture. In the granulation step in the process for producing this formed body, an adhesion strengthening layer with a silane coupling agent is formed as a first layer, on the surface of a soft magnetic alloy powder. This is said to increase the adhesion between the inorganic insulating powder and the soft magnetic powder. Furthermore, a binding layer with silicone resin is formed as a second layer, on the surface of the adhesion strengthening layer with a silane coupling agent.

### CITATION LIST

### Patent Literature

PTL 1: JP2015-230930A
PTL 2: WO2011/077694A1

### SUMMARY

### (Technical Problem)

Al₂O₃ and SiO₂ have high hardness. Thus, the addition of Al₂O₃ or SiO₂ as in PTL 1 may break the insulating coating on the surface of the soft magnetic powder during compression molding of the formed body. In addition, PTL 1 does not consider the effect of inevitable impurities such as aluminum orthophosphate contained in condensed phosphoric acid metal salts such as aluminum tripolyphosphate, on the strength of the insulating coating. Therefore, considering the effect of inevitable impurities, it is desirable to provide a method for producing an iron-based soft magnetic composite powder having insulating coating that is less likely to be broken during compression molding, and the iron-based soft magnetic composite powder.

In the method described in PTL 2, an organic solvent is used when the silane coupling agent is added. This increases production costs due to the need for solvent drying treatment. The use of the organic solvent also increases the burden of safety controls, such as fire prevention. Additional burdens such as installation of a solvent recovery system also arise to avoid the release of the organic solvent to the environment. Thus, the production method using an organic solvent results in higher production costs. Therefore, avoidance of an increase in producing costs is required.

It could thus be helpful to provide a method for producing an iron-based soft magnetic composite powder having insulating coating that is less likely to be broken during compression molding, while avoiding an increase in producing costs, and the iron-based soft magnetic composite powder.

### (Solution to Problem)

A method for producing an iron-based soft magnetic composite powder according to the present disclosure to achieve the above-mentioned purpose includes
a first mixing step of adding an aluminum dihydrogen tripolyphosphate dihydrate powder to an iron-based soft magnetic powder and stirring and mixing the aluminum dihydrogen tripolyphosphate dihydrate powder and the iron-based soft magnetic powder to obtain a first composite powder in which coating layers of aluminum dihydrogen tripolyphosphate dihydrate are formed on the surfaces of iron-based soft magnetic particles, and
for the spectrum when the aluminum dihydrogen tripolyphosphate dihydrate powder is analyzed by X-ray diffraction method, the peak intensity of the (112) plane of aluminum dihydrogen tripolyphosphate dihydrate is 1.5 times higher than the peak intensity of the (102) plane of aluminum orthophosphate.

In the method for producing an iron-based soft magnetic composite powder according to the present disclosure, furthermore,
the additive amount of the aluminum dihydrogen tripolyphosphate dihydrate powder may be 0.10 mass% or more and 0.50 mass% or less with respect to the iron-based soft magnetic powder.

The method for producing an iron-based soft magnetic composite powder according to the present disclosure may further
include a second mixing step of adding a silicone resin powder to the first composite powder and stirring and mixing the silicone resin powder and the first composite powder to obtain a second composite powder, and
the additive amount of the silicone resin powder may be 0.10 mass% or more and 1.50 mass% or less with respect to the iron-based soft magnetic powder.

In the method for producing an iron-based soft magnetic composite powder according to the present disclosure, furthermore,
the temperature of the powders during stirring and mixing in the second mixing step may be 80 °C or higher.

The method for producing an iron-based soft magnetic composite powder according to the present disclosure may further
include a cooling step of cooling the first composite powder to 80 °C or lower,
the maximum arrival temperature of the powders during stirring and mixing in the first mixing step may be 130 °C or higher and 200 °C or lower, and
the second mixing step may be performed during the cooling step.

The method for producing an iron-based soft magnetic composite powder according to the present disclosure may further
include a third mixing step of adding a lubricant to the first composite powder and stirring and mixing the lubricant and the first composite powder to obtain a third composite powder.

The method for producing an iron-based soft magnetic composite powder according to the present disclosure may further
include a third mixing step of adding a lubricant to the second composite powder and stirring and mixing the lubricant and the second composite powder to obtain a third composite powder.

An iron-based soft magnetic composite powder according to the present disclosure to achieve the above-mentioned purpose contains composite particles having:
iron-based soft magnetic particles; and
coating layers that coat the surfaces of the iron-based soft magnetic particles,
the coating layers each have a first coating layer formed of aluminum dihydrogen tripolyphosphate dihydrate, and
for the spectrum when the aluminum dihydrogen tripolyphosphate dihydrate powder is analyzed by X-ray diffraction method, the peak intensity of the (112) plane of aluminum dihydrogen tripolyphosphate dihydrate is 1.5 times higher than the peak intensity of the (102) plane of aluminum orthophosphate.

In the iron-based soft magnetic composite powder according to the present disclosure, furthermore,
the content of the aluminum dihydrogen tripolyphosphate dihydrate powder may be 0.10 mass% or more and 0.50 mass% or less with respect to iron.

In the iron-based soft magnetic composite powder according to the present disclosure, furthermore,
the coating layers each may have a second coating layer formed of silicone resin on the outer surface of the first coating layer, and
the content of the silicone resin may be 0.10 mass% or more and 1.50 mass% or less with respect to iron.

The iron-based soft magnetic composite powder according to the present disclosure may further
contain a lubricant.

### (Advantageous Effect)

According to the present disclosure, it is possible to provide a method for producing an iron-based soft magnetic composite powder having insulating coating that is less likely to be broken during compression molding, while avoiding an increase in producing costs, and the iron-based soft magnetic composite powder.

### DETAILED DESCRIPTION

The following describes a method for producing an iron-based soft magnetic composite powder and the iron-based soft magnetic composite powder, according to one of the disclosed embodiments.

First, an overview of the method for producing an iron-based soft magnetic composite powder and the iron-based soft magnetic composite powder according to this embodiment is described.

The method for producing an iron-based soft magnetic composite powder according to this embodiment includes a first mixing step of adding an aluminum dihydrogen tripolyphosphate dihydrate powder to an iron-based soft magnetic powder and stirring and mixing the aluminum dihydrogen tripolyphosphate dihydrate powder and the iron-based soft magnetic powder to obtain a first composite powder in which coating layers of aluminum dihydrogen tripolyphosphate dihydrate are formed on the surfaces of iron-based soft magnetic particles. For the spectrum when the aluminum dihydrogen tripolyphosphate dihydrate powder is analyzed by X-ray diffraction method, the peak intensity of the (112) plane of aluminum dihydrogen tripolyphosphate dihydrate is 1.5 times higher than the peak intensity of the (102) plane of aluminum orthophosphate.

According to the above production method, it is possible to obtain an iron-based soft magnetic composite powder having a coating layer (insulating coating) that is less likely to be broken during compression molding (pressing), while avoiding an increase in producing costs.

The iron-based soft magnetic composite powder obtained by the above production method contains composite particles having iron-based soft magnetic particles and coating layers that coat the surfaces of the iron-based soft magnetic particles, and the coating layers each have a first coating layer formed of aluminum dihydrogen tripolyphosphate dihydrate. In this iron-based soft magnetic composite powder, for the spectrum when the aluminum dihydrogen tripolyphosphate dihydrate powder is analyzed by X-ray diffraction method, the peak intensity of the (112) plane of aluminum dihydrogen tripolyphosphate dihydrate is 1.5 times higher than the peak intensity of the (102) plane of aluminum orthophosphate.

In addition to the above first mixing step, the method for producing an iron-based soft magnetic composite powder according to this embodiment may include a cooling step of cooling the first composite powder to 80 °C or lower, a second mixing step of adding a silicone resin powder to the first composite powder and stirring and mixing the silicone resin powder and the first composite powder to obtain a second composite powder, and a third mixing step of adding a lubricant to the second composite powder and stirring and mixing the lubricant and the second composite powder to obtain a third composite powder.

That is, the iron-based soft magnetic composite powder according to this embodiment may include, as a coating layer, in addition to the above first coating layer, a second coating layer formed of silicone resin, on the outer surface (the surface located outside the composite particle) of the first coating layer. The outer surface of the coating layer may be further coated with a lubricant.

The following describes details of the method for producing an iron-based soft magnetic composite powder and the iron-based soft magnetic composite powder.

An iron-based soft magnetic powder (so-called iron powder) is an assembly of iron-based soft magnetic particles (so-called iron fine particles, hereinafter sometimes referred to as iron particles). The iron-based soft magnetic particles are the core particles for producing iron-based soft magnetic composite particles. The iron-based soft magnetic composite powder is an assembly of the iron-based soft magnetic composite particles.

In the following description, the term "powder" may be used simply to encompass the meaning of particles. That is, the term "iron-based soft magnetic powder" may be used to encompass a case where the iron-based soft magnetic powder refers to iron particles. In particular, the iron-based soft magnetic powder may be referred to simply as an iron powder, encompassing a case where the iron powder refers to iron particles. Various types of powders that are subjected to unit operations such as stirring, mixing, and heating may be sometimes collectively referred to as a powder.

Pure iron powders are preferred for the iron-based soft magnetic powder. As the iron-based soft magnetic powder, a water-atomized iron powder is particularly preferred among pure iron powders. The water-atomized iron powder has numerous irregularities on the surface of the particles, which may lead to entanglement of the particles. When the water-atomized iron powder is molded as a dust core, the strength of the dust core may be increased. The iron-based soft magnetic powder preferably has good compressibility. Good compressibility improves the formability when a dust core is formed by compression molding.

When a pure iron powder is used as the iron-based soft magnetic powder, its apparent density is preferably 2.8 Mg/m³ or higher. When the apparent density is lower than 2.8 Mg/m³, the density of the dust core may decrease.

When a pure iron powder is used as the iron-based soft magnetic powder, its particle size is preferably 40 µm or more, and its particle size is preferably 250 µm or less, when evaluated by volume-based median size (50 % particle diameter, so-called D₅₀). In the following, the particle size when evaluated by median size is simply described as a particle size. When the particle size is less than 40 µm, the flowability of the iron powder is reduced. This may result in poor press mold filling and poor formability when a dust core is formed by compression molding. When the particle size exceeds 250 µm, energy loss due to eddy current in the iron particles increases. The median size may be measured using a particle size distribution analyzer employing the laser diffraction method. For example, Partica LA-960V2 produced by HORIBA, Ltd. may be used as a particle size distribution analyzer.

The first mixing step is a step to obtain a first composite powder by forming insulating first coating layers, formed of aluminum dihydrogen tripolyphosphate dihydrate, on the surfaces of the above iron particles, as coating layers. The first coating layers are less likely to be broken during compression molding of the iron-based soft magnetic composite powder.

Aluminum dihydrogen tripolyphosphate dihydrate is a raw material for forming coating layers with insulating properties (in this embodiment, the first coating layers) on the surfaces of the iron particles. Aluminum dihydrogen tripolyphosphate dihydrate reacts well with iron. Mixing an aluminum dihydrogen tripolyphosphate dihydrate powder together with an iron powder forms a first coating layer with high adhesion and insulation properties on the surface of the iron powder.

Aluminum dihydrogen tripolyphosphate dihydrate with higher crystallinity improves the reactivity with the iron powder to improve the adhesion to the iron powder. Aluminum dihydrogen tripolyphosphate dihydrate with lower crystallinity decreases the reactivity with the iron powder to decrease the adhesion to the iron particles. The reason that aluminum dihydrogen tripolyphosphate dihydrate with higher crystallinity improves the reactivity with the iron powder is that aluminum dihydrogen tripolyphosphate dihydrate with higher crystallinity forms more chemical bonds with ferric ions (Fe³⁺).

Aluminum dihydrogen tripolyphosphate dihydrate with a higher content of aluminum orthophosphate, which is inevitably contained, decreases the adhesion to the iron particles.

Thus, in order to improve the adhesion between the first coating layers consisting of aluminum dihydrogen tripolyphosphate dihydrate and the iron particles, the aluminum dihydrogen tripolyphosphate dihydrate powder used to form the first coating layers preferably has high crystallinity and has a low content of aluminum orthophosphate.

As mentioned above, in this embodiment, it is important to evaluate the effects of crystallinity and impurities of the aluminum dihydrogen tripolyphosphate dihydrate powder. In this embodiment, an evaluation based on powder X-ray diffraction is used to evaluate the effects of crystallinity and impurities of the aluminum dihydrogen tripolyphosphate dihydrate powder.

That is, in this embodiment, an aluminum dihydrogen tripolyphosphate dihydrate powder is used when, for its X-ray diffraction spectrum when analyzed by X-ray diffraction method, the peak intensity of the (112) plane of aluminum dihydrogen tripolyphosphate dihydrate is 1.5 times higher than the peak intensity of the (102) plane of aluminum orthophosphate. The peak intensity of the (112) plane of aluminum dihydrogen tripolyphosphate dihydrate is preferably 3.0 times or more than the peak intensity of the (102) plane of aluminum orthophosphate. The ratio (A/B) of the peak intensity (A) of the (112) plane of aluminum dihydrogen tripolyphosphate dihydrate to the peak intensity (B) of the (102) plane of aluminum orthophosphate in the X-ray diffraction spectrum is hereinafter referred to simply as an intensity ratio. That is, the intensity ratio is 1.5 times or more, preferably 3 times or more. Setting the intensity ratio in such a range allows for selection of an aluminum dihydrogen tripolyphosphate dihydrate powder with high crystallinity and few impurities. This can improve the adhesion of the first coating layers to provide a method for producing an iron-based soft magnetic composite powder having coating layers as insulating coating that is less likely to be broken during compression molding, and the iron-based soft magnetic composite powder.

In the first mixing step, the first coating layer is formed on the surface of the iron powder by adding an aluminum dihydrogen tripolyphosphate dihydrate powder to an iron powder and stirring and mixing the aluminum dihydrogen tripolyphosphate dihydrate powder and the iron powder. The first coating layer can be formed by a dry method without using water or organic solvents. Thus, an increase in producing costs can be avoided.

Mixing in the first mixing step may be performed using a mixing device normally used for stirring and mixing of powders. An example of a suitable mixing device to be used is a stirring vane type mixer in which a stirring vane rotating along a horizontal plane is provided at the bottom of the mixing vessel. Examples of the suitable stirring vane type mixer include FM Mixer series produced by NIPPON COKE & ENGINEERING CO.,LTD. and High Speed Mixer series produced by EARTHTECHNICA CO., LTD.

In order to improve the adhesion between aluminum dihydrogen tripolyphosphate dihydrate and the iron particles, mixing in the first mixing step is preferably heat-mixing. The maximum arrival temperature of the temperature of the powders during stirring and mixing in the first mixing step is preferably 130 °C or higher and 200 °C or lower. In the following, the temperature of the powders during stirring and mixing may be referred to simply as a mixing temperature. The mixing temperature in this embodiment is the temperature of the powders during stirring and mixing, as measured by a thermocouple inserted into the tank of the mixing vessel in the mixing device. The thermocouple is installed at a position where the thermocouple is buried in the powder layer that is stationary in the mixing tank, in a state where the mixing device is stationary.

When the maximum arrival temperature of the mixing temperature is within the range of 130 °C or higher and 200 °C or lower, a higher mixing temperature causes aluminum dihydrogen tripolyphosphate dihydrate to be likely to form the first coating layers. The maximum arrival temperature of the mixing temperature is preferably 150 °C or higher and 200 °C or lower. When the maximum arrival temperature of the mixing temperature is less than 130 °C, the adhesion between the first coating layers and the iron particles is decreased. On the other hand, when the mixing temperature exceeds 200 °C, oxidation of the iron-based soft magnetic composite powder progresses to decrease the density of the dust core.

When the maximum arrival temperature during mixing is within the above range, the alteration and the decrease in crystallinity of aluminum dihydrogen tripolyphosphate dihydrate can be suppressed.

The mixing temperature may be controlled by heating or cooling. For example, the mixing temperature may be controlled by installing a heating/cooling jacket in the mixing vessel of the mixing device and heating or cooling the powders in the tank of the mixing vessel from outside the mixing device. Heating or cooling of the mixing vessel may be performed using steam, hot water or cold water, or a refrigerant. In controlling the mixing temperature, for heating, the mixing heat produced by mixing treatment in the mixing device may be used.

After the first mixing step, a cooling step is preferably performed to cool the first composite powder to 80 °C or lower. This facilitates subsequent handling of the iron-based soft magnetic composite powder.

The tank of the mixing vessel may be filled with an inert gas such as nitrogen gas. This can prevent oxidation of the powders during stirring and mixing.

The additive amount of the aluminum dihydrogen tripolyphosphate dihydrate powder in the first mixing step is 0.10 mass% or more and 0.50 mass% or less with respect to the iron-based soft magnetic powder. This makes it possible to obtain an iron-based soft magnetic composite powder in which the content of aluminum dihydrogen tripolyphosphate dihydrate is 0.10 mass% or more and 0.50 mass% or less with respect to iron. The additive amount of the aluminum dihydrogen tripolyphosphate dihydrate powder is preferably 0.15 mass% or more. The additive amount of the aluminum dihydrogen tripolyphosphate dihydrate powder is preferably 0.30 mass% or less.

When the additive amount of the aluminum dihydrogen tripolyphosphate dihydrate powder exceeds 0.50 mass%, the specific resistance of the dust core produced using the iron-based soft magnetic composite powder may deteriorate. This is presumably due to the increased thickness of the first coating layer, which increases the difference in thermal expansion between the iron particle adhesion layer and the most surface layer, leading to crack and fracture.

An example of a suitable aluminum dihydrogen tripolyphosphate dihydrate powder is K-FRESH #100P produced by TTAYCA CORPORATION. The particle size (median size) of the aluminum dihydrogen tripolyphosphate dihydrate powder is 10 µm or less, preferably 5 µm or less. A smaller particle size of the aluminum dihydrogen tripolyphosphate dihydrate powder increases its specific surface area to increase the coverage of the iron particles.

The second mixing step is a step to form a second coating layer formed of silicone resin on the outer surface of the first coating layer, as a coating layer. The formation of the second coating layer improves the flexibility of the coating layer and prevents breakdown of the coating due to deformation of the iron particles during compression molding.

No particular limitation is placed on the silicone resin powder used when the second coating layer is formed. However, the silicone resin powder is preferably mainly composed of methyl groups. Examples of the suitable silicone resin powder include SILRES MK POWDER produced by Wacker Asahikasei Silicone Co.,Ltd. and KR-220LP produced by Shin-Etsu Chemical Co., Ltd.

When the second mixing step is performed, after the first mixing step, that is, stirring and mixing may be performed by adding a silicone resin powder to the first composite powder. Stirring and mixing may be continuously performed in the mixing device used in the first mixing step.

The mixing temperature in the second mixing step is preferably 80 °C or higher. When the mixing temperature is below 80 °C, silicone resin may not soften to decrease the adhesion of the second coating layer.

The second mixing step is preferably performed during the above cooling step. This makes it possible to efficiently form a second coating layer with good adhesion while controlling production costs, by using the heat stored in the powder layer immediately after the first mixing step. In detail, it is possible to ensure a mixing temperature of 80 °C or higher in the second mixing step while omitting the effort and time of cooling down after the first mixing step and heating up again for the second mixing step.

In the second process, the additive amount of the silicone resin powder is preferably 0.10 mass% or more, and the additive amount of the silicone resin powder is preferably 1.50 mass% or less, with respect to the iron-based soft magnetic powder. That is, the content of silicone resin of the iron-based soft magnetic composite powder may be 0.10 mass% or more and 1.50 mass% or less with respect to iron. When the content of silicone resin is below 0.10 mass%, the effect of improving the flexibility of the coating layer by the addition is less likely to occur. When the content of silicone resin exceeds 1.50 mass%, the specific resistance of the dust core may deteriorate as in the case where the additive amount of the aluminum dihydrogen tripolyphosphate dihydrate powder exceeds 0.50 mass%. The range of the additive amount of silicone resin is preferably 0.60 mass% or less, and more preferably 0.30 mass% or less.

The third mixing step is a step to obtain a third composite powder obtained by adding a lubricant to the first composite powder or the second composite powder. When the third mixing step is performed, after the first mixing step or the second mixing step, that is, stirring and mixing may be performed by adding a lubricant to the first composite powder or the second composite powder. Stirring and mixing may be continuously performed in the mixing device used in the first mixing step or the second mixing step. Adding a lubricant to the iron-based soft magnetic composite powder can improve the formability in the compression molding described below and suppress the breakdown of the coating layer during compression molding.

The iron-based soft magnetic composite powder (first composite powder, second composite powder, or third composite powder) with a coating layer having insulating properties as described above is suitable as a raw material for the dust core. The iron-based soft magnetic composite powder may be compression molded using a press mold with a desired dimensional shape to be a formed body with a predetermined shape (green compact, formed body to produce a dust core).

Compression molding of the above iron-based soft magnetic composite powder may be performed using a molding method used for a general iron-based soft magnetic powder, such as room temperature molding and press mold lubrication molding.

In the compression molding of the above iron-based soft magnetic composite powder, the molding pressure is preferably 980 MPa or higher. Increased molding pressure increases compressed density, which may increase the strength of the formed body. Of course, the molding pressure may be less than 980 MPa if practical strength is applied to the formed body.

During compression molding of the iron-based soft magnetic composite powder, a lubricant may be applied to the press mold wall surface if necessary, or a lubricant may be added to the iron-based soft magnetic composite powder in advance (i.e., the iron-based soft magnetic composite powder may be used as the third composite powder). This allows for better formability in compression molding. That is, friction between the press mold and the iron-based soft magnetic composite powder can be reduced during compression molding. In addition, the reduction in the density of the formed body during compression molding can be suppressed. Moreover, the friction when the formed body is removed from the press mold after compression molding can be reduced. These can also suppress cracking of the formed body during molding and when the formed body is removed from the press mold.

The lubricant is preferably added to the iron-based soft magnetic composite powder in advance (the iron-based soft magnetic composite powder is the third composite powder). This can reduce the friction between the iron-based soft magnetic composite particles to suppress the breakdown of the coating layer during compression molding. If the lubricant is added to the iron-based soft magnetic composite powder in advance, especially when compression molding is performed at high pressure, the effect of suppressing the breakdown of the coating layer during compression molding may be enhanced.

Suitable examples of the lubricant include metal soaps such as lithium stearate, zinc stearate, and calcium stearate, and waxes such as fatty acid amides.

The formed body obtained by compression molding the iron-based soft magnetic composite powder is subjected to heat treatment, if necessary, to be a dust core. This heat treatment can reduce the iron loss of the dust core. Any heat treatment method normally used in the production of the dust core can be suitably used for this heat treatment.

### EXAMPLES

The following describes a method for producing an iron-based soft magnetic composite powder and the iron-based soft magnetic composite powder, according to this embodiment, based on examples. This embodiment is not limited to the examples.

JIP 304AS produced by JFE Steel Corporation, a water-atomized pure iron powder with an apparent density of 3.0 Mg/m³ and a median size of 100 µm, was used as the iron-based soft magnetic powder.

K-FRESH #100P produced by TAYCA CORPORATION was used as the aluminum dihydrogen tripolyphosphate dihydrate powder. Four types of aluminum dihydrogen tripolyphosphate dihydrate powders (K-FRESH #100P) with different serial numbers were prepared.

The aluminum dihydrogen tripolyphosphate dihydrate powder was evaluated by powder X-ray diffraction for each serial number to calculate the intensity ratio (A/B). The intensity ratios of the respective aluminum dihydrogen tripolyphosphate dihydrate powders were 1.26, 1.77, 3.63, and 3.22. CuKα (6.9 keV) was used as the X-ray source in the measurement of the X-ray diffraction intensity distribution.

Using the above iron-based soft magnetic powder and aluminum dihydrogen tripolyphosphate dihydrate powders, iron-based soft magnetic composite powders were produced according to the formulas presented in Table 1 below, as the respective iron-based soft magnetic composite powders in Experiment 1 to Experiment 14. As described below, Experiments 1-3, 5, 6-8, and 10-14 are examples, and Experiments 4 and 9 are comparative examples.

**Table 1**

| | | Aluminum dihydrogen tripolyphosphate dihydrate | | Silicone resin | Lubricant |
|---|---|---|---|---|---|
| | | Additive amount (mass%) | Intensity ratio (-) | Additive amount (mass%) | Additive amount (mass%) |
| Experiment 1 | Example 1 | 0.30 | 3.22 | 0.00 | 0.3 |
| Experiment 2 | Example 2 | 0.30 | 1.77 | 0.00 | 0.3 |
| Experiment 3 | Example 3 | 0.30 | 3.63 | 0.00 | 0.3 |
| Experiment 4 | Comparative Example 1 | 0.30 | 1.26 | 0.00 | 0.3 |
| Experiment 5 | Example 4 | 0.15 | 1.77 | 0.00 | 0.3 |
| Experiment 6 | Example 5 | 0.50 | 1.77 | 0.00 | 0.3 |
| Experiment 7 | Example 6 | 0.30 | 1.77 | 0.20 | 0.3 |
| Experiment 8 | Example 7 | 0.30 | 3.63 | 0.20 | 0.3 |
| Experiment 9 | Comparative Example 2 | 0.30 | 1.26 | 0.20 | 0.3 |
| Experiment 10 | Example 8 | 0.30 | 1.77 | 0.10 | 0.3 |
| Experiment 11 | Example 9 | 0.30 | 1.77 | 0.30 | 0.3 |
| Experiment 12 | Example 10 | 0.30 | 1.77 | 0.60 | 0.3 |
| Experiment 13 | Example 11 | 0.30 | 1.77 | 1.00 | 0.3 |
| Experiment 14 | Example 12 | 0.30 | 1.77 | 1.50 | 0.3 |

The mixing device used from the first mixing step to the third mixing step was High Speed Mixer LFS-GS2J produced by EARTHTECHNICA CO., LTD. Through the entire step, the tank of the mixing device was kept in a nitrogen atmosphere. The rotating speed of the stirring vane was set at 500 rotations per minute.

First, first coating layers in Experiment 1 to Experiment 14 were obtained by stirring and mixing the iron-based soft magnetic powder and the aluminum dihydrogen tripolyphosphate dihydrate powder as raw material powders for 20 minutes using the above mixing device, in the respective intensity ratio combinations and the respective additive amount ratios of the aluminum dihydrogen tripolyphosphate dihydrate powder presented in Table 1 to form first coating layers. The amount of raw material powders fed into the mixing device was 1.5 kg. Stirring and mixing were performed while the mixing vessel was heated. The mixing temperature was 170 °C. The additive amount of the aluminum dihydrogen tripolyphosphate dihydrate presented in Table 1 is a percentage with respect to the mass of the iron-based soft magnetic composite powder.

Second composite powders in Experiment 7 to Experiment 14 were obtained by further adding a silicone resin powder (KR-220LP produced by Shin-Etsu Chemical Co., Ltd.) to the first composite powders in Experiment 7 to Experiment 14 and stirring and mixing the silicone resin powder and the first composite powders to form second coating layers. The additive amount of the silicone resin presented in Table 1 is a percentage with respect to the mass of the iron-based soft magnetic composite powder. The addition of the silicone resin powder to the first composite powder and stirring and mixing were performed during the cooling step after the first composite powder was produced. The addition of the silicone resin powder to the first composite powder was performed at the time when the temperature of the first composite powder in the mixing device dropped to 120 °C. After the addition of the silicone resin powder to the first composite powder, the silicone resin powder and the first composite powder were further stirred and mixed for 5 minutes to obtain each second composite powder. The second composite powder was further cooled to 60 °C.

Furthermore, iron-based soft magnetic composite powders in Example 1 to Example 14 were produced by adding N,N'-Ethylenebis(stearamide) as a lubricant to the first composite powders in Experiment 1 to Experiment 6 and the second composite powders in Experiment 7 to Experiment 14 and stirring and mixing these materials. The additive amount of Ethylenebis(stearamide) presented in Table 1 is a percentage with respect to the mass of the iron-based soft magnetic composite powder.

The produced iron-based soft magnetic composite powders were evaluated for specific resistance and compressed density. The evaluation results are presented in Table 2 below. In Table 2, the intensity ratios presented in Table 1 are restated for ease of viewing.

### [Table 2]

**Table 2**

| | | Intensity ratio (-) | Molding pressure: 980 MPa | | Molding pressure: 1470 MPa | | Rate of decrease in specific resistance (%) |
|---|---|---|---|---|---|---|---|
| | | | Specific resistance (µΩm) | Density (g/cm³) | Specific resistance (µΩm) | Density (g/cm³) | |
| Experiment 1 | Example 1 | 3.22 | 251 | 7.54 | 189 | 7.66 | 24 |
| Experiment 2 | Example 2 | 1.77 | 161 | 7.53 | 115 | 7.65 | 29 |
| Experiment 3 | Example 3 | 3.63 | 271 | 7.55 | 212 | 7.68 | 22 |
| Experiment 4 | Comparative Example 1 | 1.26 | 103 | 7.52 | 14 | 7.64 | 86 |
| Experiment 5 | Example 4 | 1.77 | 132 | 7.57 | 102 | 7.69 | 23 |
| Experiment 6 | Example 5 | 1.77 | 201 | 7.49 | 135 | 7.60 | 33 |
| Experiment 7 | Example 6 | 1.77 | 725 | 7.52 | 530 | 7.65 | 27 |
| Experiment 8 | Example 7 | 3.63 | 1355 | 7.53 | 1166 | 7.66 | 14 |
| Experiment 9 | Comparative Example 2 | 1.26 | 517 | 7.49 | 94 | 7.63 | 82 |
| Experiment 10 | Example 8 | 1.77 | 436 | 7.55 | 313 | 7.66 | 28 |
| Experiment 11 | Example 9 | 1.77 | 1412 | 7.48 | 1035 | 7.60 | 27 |
| Experiment 12 | Example 10 | 1.77 | 5858 | 7.24 | 4374 | 7.17 | 25 |
| Experiment 13 | Example 11 | 1.77 | 17352 | 6.66 | 13215 | 6.87 | 24 |
| Experiment 14 | Example 12 | 1.77 | 40665 | 5.83 | 30409 | 5.74 | 25 |

First, each iron-based soft magnetic composite powder was formed at molding pressures of 980 MPa and 1470 MPa to produce a ring-shaped test piece (formed body). The test piece has an outer diameter of 38 mm, an inner diameter of 25 mm, and a height of 6 mm. The produced test piece was further subjected to heat treatment under a nitrogen atmosphere to be a dust core. The condition of this heat treatment was maintaining at 500 °C for 45 minutes. For each dust core, dimensions and weight were measured, and compressed density was calculated from these dimensions and weight.

Specific resistance was measured by the four-terminal method. The good target value of specific resistance was set to be 100 µΩm or more, which sufficiently suppresses eddy current losses, based on the study by Fujita et al. (Yuichiro Fujita, Takanobu Saito: DENKI-SEIKO, 79 (2008), p. 109-117).

When the intensity ratio was 1.5 or higher (see the experiments other than Experiments 4 and 9), the specific resistance of the dust core was good, 100 µΩm or more, even at a high molding pressure of 1470 MPa. When the intensity ratio was 1.5 or higher (see the experiments other than Experiments 4 and 9), the rate of decrease in specific resistance was good, 14 % or more and 33 % or less, than that of molding at 980 MPa. The rate of decrease in specific resistance is good when it is below 33 %, indicating that the breakdown of the coating layer is suppressed even when the molding pressure is increased.

In Experiment 4, where the intensity ratio was less than 1.5, the specific resistance of the dust core significantly decreased when the molding pressure was 1470 MPa. This is thought to be due to the breakdown of the coating layer during molding.

Experiment 2, Experiment 5, and Experiment 6 differ in the additive amount of the aluminum dihydrogen tripolyphosphate dihydrate powder. From these experiments, it is thought that, when the intensity ratio is 1.5 or higher and the additive amount of the aluminum dihydrogen tripolyphosphate dihydrate powder is 0.50 mass% or less, the specific resistance of the dust core molded at 1470 MPa will be 100 µΩm or higher, and the rate of decrease in specific resistance will be less than 33 %.

Experiment 7 to Experiment 9 are common in that similar second coating layers are formed, and differ in the intensity ratio of the added aluminum dihydrogen tripolyphosphate dihydrate. Similarly to the comparative results of Experiment 5 and Experiment 6 above, the specific resistance of the dust core molded at 1470 MPa was good, 100 µΩm or more, when the intensity ratio was 1.5 or more (see Experiments 7 and 8). In Experiment 9, where the intensity ratio was less than 1.5, the specific resistance of the dust core molded at 1470 MPa was less than 100 µΩm, and the rate of decrease in specific resistance exceeded 33 %.

Compared with Experiment 2 to Experiment 4, which each have a first coating layer of aluminum dihydrogen tripolyphosphate dihydrate with the same intensity ratio as Experiment 7 to Experiment 9, respectively, and have no second coating layer, in Experiment 7 to Experiment 9, the specific resistances are high by and large. It is though that this is because, in Experiment 7 to Experiment 9, the formation of the second coating layer improved the flexibility of the coating layer compared with Experiment 2 to Experiment 4, which makes the breakdown of the coating due to deformation of the iron particles during compression molding be less likely to occur.

According to the results of Experiments 2, 7, and 10-14, each having a first coating layer of aluminum dihydrogen tripolyphosphate dihydrate with the same intensity ratio and having a different additive amount of silicone resin, it is also found that the specific resistance of the dust core is good, 100 µΩm or more, when the intensity ratio is 1.5 or higher. In Experiments 2, 7, and 10-14, the rate of decrease in specific resistance is also good, less than 33 %.

The additive amount of silicone resin increases in the order of Experiments 2, 10, 7, 11, 12, 13, and 14. It is found that the value of the specific resistance also increases in this order. That is, in terms of the additive amount of silicone resin, it is found that, as long as the additive amount of silicone resin is within the range of 0.10 mass% or more and 1.50 mass% or less, a large additive amount of silicone resin increases the value of the specific resistance. It is though that this is because, within the predetermined range, a large additive amount of silicone resin improves the flexibility of the coating layer, which makes the breakdown of the coating due to deformation of the iron particles during compression molding be less likely to occur.

Of the experiments other than Experiments 4 and 9, where the rate of decrease in specific resistance is 33 % or less, the iron-based soft magnetic composite powders in Experiments 1-3, 5-8, 10, and 11, where the value of the specific resistance is controlled relatively small (e.g., the value of the specific resistance is controlled to be 100 µΩm or more and 2000 µΩm or less) (i.e., the iron-based soft magnetic composite powders with an additive amount of silicone resin of 0.3 mass% or less) are particularly suitable for use in the magnetic core of motors. In contrast, the iron-based soft magnetic composite powders in Experiments 12-14, where the value of the specific resistance is controlled relatively large (e.g., the value of the specific resistance is controlled to be more than 2000 µΩm), are particularly suitable for use in the magnetic core of reactors and inverters.

Thus, it is found that, when the intensity ratio is 1.5 or higher, the specific resistance of the dust core indicates 100 µΩm or more even at a high molding pressure of 1470 MPa, and the breakdown of the coating layer is suppressed. In addition, in terms of the rate of decrease in specific resistance, it is found that, when the intensity ratio is 1.5 or higher, the rate of decrease in specific resistance is below 33 %, and the breakdown of the coating layer is suppressed even when the molding pressure increases.

In this way, it is possible to provide a method for producing an iron-based soft magnetic composite powder having insulating coating that is less likely to be broken during compression molding, while avoiding an increase in producing costs, and the iron-based soft magnetic composite powder.

The embodiment disclosed herein is an example, and the embodiment of the present disclosure is not limited thereto and may be modified as appropriate to the extent not to depart from the purpose of the present disclosure.

### INDUSTRIAL APPLICABILITY

The present disclosure is applicable to a method for producing an iron-based soft magnetic composite powder and the iron-based soft magnetic composite powder.

## Claims

1. A method for producing an iron-based soft magnetic composite powder, comprising a first mixing step of adding an aluminum dihydrogen tripolyphosphate dihydrate powder to an iron-based soft magnetic powder and stirring and mixing the aluminum dihydrogen tripolyphosphate dihydrate powder and the iron-based soft magnetic powder to obtain a first composite powder in which coating layers of aluminum dihydrogen tripolyphosphate dihydrate are formed on the surfaces of iron-based soft magnetic particles,
wherein, for the spectrum when the aluminum dihydrogen tripolyphosphate dihydrate powder is analyzed by X-ray diffraction method, the peak intensity of the (112) plane of aluminum dihydrogen tripolyphosphate dihydrate is 1.5 times higher than the peak intensity of the (102) plane of aluminum orthophosphate.

2. The method for producing an iron-based soft magnetic composite powder according to claim 1, wherein the additive amount of the aluminum dihydrogen tripolyphosphate dihydrate powder is 0.10 mass% or more and 0.50 mass% or less with respect to the iron-based soft magnetic powder.

3. The method for producing an iron-based soft magnetic composite powder according to claim 2, further comprising a second mixing step of adding a silicone resin powder to the first composite powder and stirring and mixing the silicone resin powder and the first composite powder to obtain a second composite powder,
wherein the additive amount of the silicone resin powder is 0.10 mass% or more and 1.50 mass% or less with respect to the iron-based soft magnetic powder.

4. The method for producing an iron-based soft magnetic composite powder according to claim 3, wherein the temperature of the powders during stirring and mixing in the second mixing step is 80 °C or higher.

5. The method for producing an iron-based soft magnetic composite powder according to claim 4, further comprising a cooling step of cooling the first composite powder to 80 °C or lower,
wherein the maximum arrival temperature of the powders during stirring and mixing in the first mixing step is 130 °C or higher and 200 °C or lower, and
the second mixing step is performed during the cooling step.

6. The method for producing an iron-based soft magnetic composite powder according to claim 1 or 2, further comprising a third mixing step of adding a lubricant to the first composite powder and stirring and mixing the lubricant and the first composite powder to obtain a third composite powder.

7. The method for producing an iron-based soft magnetic composite powder according to any one of claims 3 to 5, further comprising a third mixing step of adding a lubricant to the second composite powder and stirring and mixing the lubricant and the second composite powder to obtain a third composite powder.

8. An iron-based soft magnetic composite powder, comprising composite particles having:
iron-based soft magnetic particles; and
coating layers that coat the surfaces of the iron-based soft magnetic particles,
wherein the coating layers each have a first coating layer formed of aluminum dihydrogen tripolyphosphate dihydrate, and
for the spectrum when the aluminum dihydrogen tripolyphosphate dihydrate powder is analyzed by X-ray diffraction method, the peak intensity of the (112) plane of aluminum dihydrogen tripolyphosphate dihydrate is 1.5 times higher than the peak intensity of the (102) plane of aluminum orthophosphate.

9. The iron-based soft magnetic composite powder according to claim 8, wherein the content of the aluminum dihydrogen tripolyphosphate dihydrate is 0.10 mass% or more and 0.50 mass% or less with respect to iron.

10. The iron-based soft magnetic composite powder according to claim 9, wherein the coating layers each have a second coating layer formed of silicone resin on the outer surface of the first coating layer, and
the content of the silicone resin is 0.10 mass% or more and 1.50 mass% or less with respect to iron.

11. The iron-based soft magnetic composite powder according to claim 9 or 10, further comprising a lubricant.
